(19) Europäisches Patentamt
European Patent Office
Office européen des brevets

(11) EP 3 424 688 B1

(12) **EUROPEAN PATENT SPECIFICATION**

(45) Date of publication and mention of the grant of the patent:
**18.11.2020 Bulletin 2020/47**

(21) Application number: **16892799.4**

(22) Date of filing: **27.10.2016**

(51) Int Cl.:
***B29D 11/00*** *(2006.01)* ***G02C 7/04*** *(2006.01)*
***G02B 1/04*** *(2006.01)*

(86) International application number:
**PCT/KR2016/012189**

(87) International publication number:
**WO 2017/150786 (08.09.2017 Gazette 2017/36)**

(54) **METHOD FOR MANUFACTURING BLUE LIGHT-BLOCKING SOFT CONTACT LENS, AND SOFT CONTACT LENS MANUFACTURED BY USING SAME**

VERFAHREN ZUR HERSTELLUNG BLAULICHTBLOCKIERENDER WEICHER KONTAKTLINSEN UND DAMIT HERGESTELLTE WEICHE KONTAKTLINSE

PROCÉDÉ DE FABRICATION D'UNE LENTILLE DE CONTACT SOUPLE BLOQUANT LA LUMIÈRE BLEUE, ET LENTILLE DE CONTACT SOUPLE BLOQUANT LA LUMIÈRE BLEUE FABRIQUÉE EN UTILISANT LEDIT PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.03.2016 KR 20160025940**

(43) Date of publication of application:
**09.01.2019 Bulletin 2019/02**

(73) Proprietor: **Medios Co Ltd**
**Daejeon 34324 (KR)**

(72) Inventor: **PARK, Jae-Yeun**
**Daejeon 34076 (KR)**

(74) Representative: **Ter Meer Steinmeister & Partner Patentanwälte mbB**
**Nymphenburger Straße 4**
**80335 München (DE)**

(56) References cited:
**WO-A2-2012/004744** **KR-A- 20060 076 290**
**KR-A- 20120 101 434** **KR-A- 20120 128 627**
**KR-A- 20130 136 596** **KR-B1- 101 540 114**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

[Technical Field]

The present invention relates to a method for manufacturing a blue light-blocking soft contact lens and more particularly, provides a method for manufacturing a soft contact lens capable of blocking blue light which may cause glare, fatigue, eye diseases, and the like in addition to a UV blocking function which is generally used.

[Background Art]

As generally known, light is constituted by ultraviolet light, visible light and infrared light, the visible light corresponds to a wavelength range of 380 nm to 780 nm, the shorter wavelength range corresponds to the ultraviolet light, and the longer wavelength range corresponds to the infrared light. Among them, in the infrared light or the visible light, light having a relatively long wavelength range such as red light, yellow light, and green light, or the like is not particularly harmful. However, since ultraviolet light having a short wavelength are harmful to human body such as skin and eyes, various methods for blocking the ultraviolet light have been provided and commercialized. However, recently, the harmfulness and the blocking method of the blue light corresponding to the short wavelength range of the visible light have been gradually known and started to be commercialized. Such blue light is generally referred to as a wavelength range of 380 nm to 500 nm, and is characterized by large scattering property and refractive property because of the short wavelength. The blue light has the large scattering property to cause deterioration of the quality of an image focused on the retina, and since the blue light has a large refractive index, the image is focused on the front side of the retina to cause fatigue and glare of eyes due to chromatic aberration. In addition, since the energy is higher as the wavelength is shorter, there is a problem in that the blue light causes an adverse effect on the visual cells. However, natural light in our everyday life does not feel a large problem because a ratio of blue light in the light is not so large. However, recently, in a light source such as a CCFL or an LED which is used for brightly expressing a display screen such as a smart phone, a tablet, a computer, and a TV which are frequently used with development of the IT industry, a ratio of the blue light is much higher than that of sunlight or fluorescent light, so that the loss of vision, glare, fatigue and headache are increasing.

In order to block the harmfulness of ultraviolet light and blue light as described above, an ultraviolet light-blocking spectacle lens, a blue light-blocking spectacle lens, a blue light-blocking protective film for a display screen, or the like has been commercialized. However, a contact lens has been widely applied to an ultraviolet light-blocking function, but the blue light-blocking is still slight. In the glass lens or the protective film for the display, techniques of absorbing and blocking the blue light by adding a brown or orange dye as a coloring agent or reflecting and blocking a wavelength range corresponding to the blue light by alternately coating a material having a high refractive index and a material having a low refractive index have been frequency applied, but such a techniques are often difficult to be applied to a contact lens. Of course, the coloring agent is added to a monomer composition capable of manufacturing a contact lens to exhibit the blue light-blocking effect, but there is a problem in that the transmittance is entirely reduced not only in the blue light wavelength range but also in the visible light wavelength range and as a result, the visibility is deteriorated. A general coloring agent is a type that is simply dispersed in the monomer composition and there is a problem in that chemical bonds are not induced so that the coloring agent is removed from the contact lens over time. In addition, the ultraviolet-light and blue light-blocking effects may also be implemented using a photochromic dye, and examples of the photochromic dye include a spiropyran compound, a spirooxazine compound, a thioindigo compound, a triarylmethane compound, and the like. These compounds are materials having colors by changing a molecular structure when being exposed to the ultraviolet light, and the compounds are normally transparent, but have gray or brown-based dark colors when exposed to the ultraviolet light to block the ultraviolet light and the blue light. However, there is a problem in that the transmittance of the visible light is reduced to deteriorate the visibility and there is a problem in that the photochromic property is deteriorated in the interior to decrease the efficiency of the blue light-blocking.

One approach to overcome the abovementioned problems has been outlined in WO 2012/004744 A1. This document suggests a composition which is formulated for ophthalmic application and which comprises a polymeric backbone composed of a plurality of backbone units, wherein the backbone units are derived from at least five specific kinds of monomers and wherein the monomers are present in a predetermined concentration of the total weight of the composition. In one embodiment, this composition further comprises an additive selected from the group consisting of a dye, a yellow dye/blue light blocker, a coating material, a heparin coating agent, a photochromic coating agent, a light-stabilizer, a pharmaceutical agent, a cell receptor functional group, a protein group, a viscosity agent, a diluent and any combination thereof. A specific example of this prior art document teaches a composition including an UV absorber in an amount of 0.2 % and a yellow dye in an amount of 0.12 %.

[Disclosure]

[Technical Problem]

In order to solve the problems in the related art described above, an object of the present invention is to provide a method for manufacturing a blue light-blocking soft contact lens and provide a method for manufacturing a blue light-blocking soft contact lens capable of expecting effects of preventing glare, fatigue, eye diseases, and the like by adding a specific compound capable of allowing the blue light to be absorbed in a monomer composition capable of manufacturing a soft contact lens to deteriorate the transmittance of the blue light passing through the contact lens.

[Technical Solution]

In order to achieve the object, the present invention is characterized by manufacturing a blue light-blocking soft contact lens by adding a specific compound having the following Chemical Formula to a generally known soft contact composition in accordance with claim 1. A structure of the specific compound in the present invention is as follows:

[Chemical Formula 1]

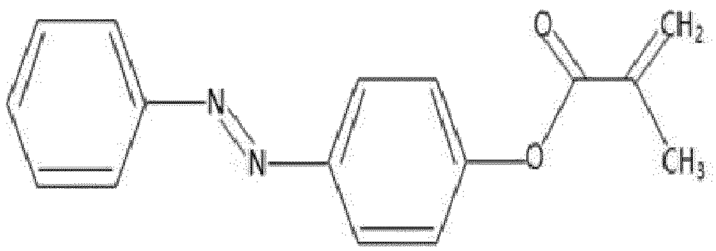

[Chemical Formula 2]

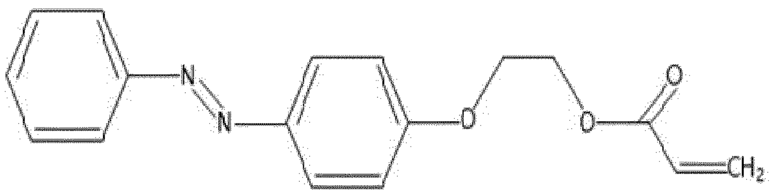

Chemical Formula 1 is referred to as 4-[(E)-phenyldiazenyl]phenyl-2-methacrylate and Chemical Formula 2 is referred to as 2-{4-[(E)-phenyldiazenyl]phenoxy}ethyl-2-acrylate.

An aspect of the present invention provides a method for manufacturing a blue light-blocking soft contact lens in accordance with claim 1. The method includes:

mixing a contact lens composition containing a hydrophilic acrylate monomer, a crosslinking agent, and an initiator;
adding a specific compound represented by Chemical Formula 1 or 2;
injecting the composition into a mold for forming the contact lens;
heat-treating the mold for forming the contact lens injected with the composition;
separating the formed contact lens from the mold;
wetting and disinfecting the contact lens; and
packing and sterilizing the contact lens.

Another aspect of the present invention provides a blue light-blocking soft contact lens manufactured by the method.

[Advantageous Effects]

According to the manufacturing method of the present invention, it is possible to manufacture a blue light-blocking soft contact lens which blocks blue light (blue-based light having a wavelength range of 380 nm to 500 nm)

capable of causing glare, fatigue, eye diseases, an the like, blocks ultraviolet light harmful to the skin and the human body, and is clear and does not disturb the visible field because the transmittance of the visible light other than light having a wavelength range corresponding to the blue light is not deteriorated.

[Description of Drawings]

FIG. 1 is a spectral distribution curve diagram of a soft contact lens obtained in Comparative Example 1 without adding a specific compound of the present invention.
FIG. 2 is a spectral distribution curve diagram of a blue light-blocking soft contact lens obtained in Example 1.
FIG. 3 is a spectral distribution curve diagram of a blue light-blocking soft contact lens obtained in Example 2.
FIG. 4 is a spectral distribution curve diagram of a soft contact lens obtained in Comparative Example 2 with adding an ultraviolet blocking agent.

[Modes of the Invention]

Hereinafter, the present invention will be described in detail.

A method for manufacturing a blue light-blocking soft contact lens of the present invention includes the features of claim 1. Amongst others, the method comprises the steps of:

mixing a contact lens composition containing a hydrophilic acrylate monomer, a crosslinking agent, and an initiator;
adding a specific compound represented by Chemical Formula 1 or 2;
injecting the composition into a mold for forming the contact lens;
heat-treating the mold for forming the contact lens injected with the composition;
separating the formed contact lens from the mold;
wetting and disinfecting the contact lens; and
packing and sterilizing the contact lens.

The hydrophilic acrylate monomer may be used by mixing one or more of hydrophilic monomers such as 2-hydroxyethyl methacrylate, N-vinyl pyrrolidone, N,N-dimethyl acrylamide, methacrylic acid, and the like. The crosslinking agent may be used by mixing one or more of monomers having two or more functional carbon double bonds, such as ethylene glycol dimethacrylate, tetraethylene glycol dimethacrylate, trimethylolpropane trimethacrylate, aryl methacrylate, divinylbenzene, and the like, and the content thereof is preferably 0.5 to 2 wt% with respect to the entire composition. When the content is less than 0.5 wt%, crosslinking is insufficient and the physical stiffness and elasticity of the contact lens deteriorate, and when the content is more than 2 wt%, there may be a problem in that the water content of the contact lens may decrease during wetting. The initiator may be selected and used from peroxides such as benzoyl peroxide, cumyl peroxide, butyl peroxide, butyl peroxybenzoate and the like or nitrile compounds such as 2,2'-azobis(2,4-dimethylpentanenitrile), 2,2'-azobis(2-methylpropanenitrile), 2,2'-azobisisobutyronitrile, 2,2'-azobisvaleronitrile and the like, and the content thereof is preferably 0.05 to 0.3 wt% with respect to the entire composition. When the content is less than 0.05 wt%, there may be a problem in that the contact lens is not polymerized and when the content is more than 0.3 wt%, the elasticity of the contact lens is lowered, and cracks are likely to occur when the contact lens is separated from the mold.

The specific compound is represented by Chemical Formula 1 or 2 and the Chemical Formula is as follows:

[Chemical Formula 1]

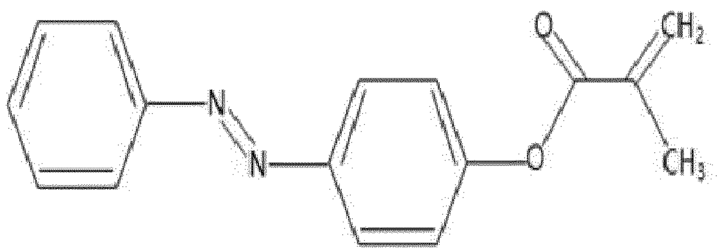

[Chemical Formula 2]

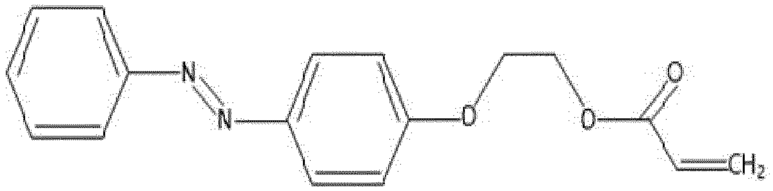

Chemical Formula 1 is referred to as 4-[(E)-phenyldiazenyl]phenyl-2-methacrylate and Chemical Formula 2 is referred to as 2-{4-[(E)-phenyldiazenyl]phenoxy}ethyl-2-acrylate. The content of the specific compound is 0.2 to 3 wt% with respect to the entire composition. When the content thereof is less than 0.2 wt%, enough blue light-blocking function to be effective is not implemented, and when the content thereof is more than 3 wt%, the blue light-blocking function is saturated and the cost thereof is very high, and thus it is not economical. It is preferred that the specific compound added to the hydrophilic acrylate composition and then uniformly dissolved and used by mixing the mixture at room temperature (25°C) or less for 30 minutes or more. The room temperature or more is not preferable because the initiation reaction of acrylate may be induced.

The acrylate composition for forming the blue light-blocking soft contact lens mixed through the above processes is injected into a mold fabricated separately. A material of the mold is not particularly limited, but in terms of ease of separation of the formed contact lens, the mold made of polypropylene is preferable. The mold injected with the composition is heat-treated at a temperature of 60 to 120°C for 4 to 12 hours and the composition in the mold is crosslinked to form the contact lens. Thereafter, the contact lens formed by the above process is separated from the mold and immersed in a separate wetting solution to perform swelling and hydration. The wetting solution may use 0.9 wt% sodium chloride physiological saline or be separately prepared. The wet treatment is performed by immersing the contact lens at room temperature for 1 to 2 hours, and thereafter, a heat treatment is performed at a temperature of 60 to 80°C for 2 to 4 hours, and the unreacted monomers remaining on the contact lens during the heat treatment are discharged to the wetting solution from the contact lens, which is generally referred to as a disinfection process. Thereafter, the lens treated in the above process is packed in a plastic or glass container filled with the 0.9 wt% sodium chloride physiological saline and then subjected to a high-pressure steam sterilization process in which all microorganisms are removed by saturated steam having a pressure of 1 atm or higher to complete the manufacture of the contact lens.

In the manufactured contact lens, a spectral distribution curve graph may be obtained by measuring transmittance in ultraviolet and visible light areas using a UV-VIS spectrophotometer (OPTIZEN 2120UV) manufactured by MECASYS, Inc., and a blocking ratio of blue light of the contact lens may be obtained by the spectral distribution curve graph. FIG. 1 is a diagram of a spectral distribution curve of a soft contact lens obtained in Comparative Example 1 without adding a specific compound of the present invention.

In the spectral distribution curve diagram of FIG. 1, when an area marked by a dotted line, that is, a rectangular area corresponding to an area of 380 to 500 nm in a wavelength range of an X-axis and a transmittance area of 0 to 100% in a Y-axis is set to 100% of incident blue light, the area of the lower portion of the spectral distribution curve may correspond to the blue light transmittance, which may be quantitatively expressed as follows:

$$T_{BL} = \frac{\int_{380}^{500} \tau(\lambda) S(\lambda) d\lambda}{\int_{380}^{500} S(\lambda) d\lambda} \times 100(\%)$$

(However, $T_{BL}$ is a transmittance of blue light, $\tau(\lambda)$ is the spectral distribution, and $S(\lambda)$ is the spectral distribution of the incident light.)

The blocking ratio of blue light may be represented by [100 - transmittance of blue light] and may be quantitatively represented as follows.

$$R_{BL} = 100 - T_{BL}(\%)$$

(However, $R_{BL}$ represents a blocking ratio of blue light.)

In the above spectral distribution curve of FIG. 1, it can be seen that 90% or more of blue light is transmitted in the case of the contact lens without adding the specific compound of the present invention.

Hereinafter, the present invention will be described in more detail as Examples. However, Examples are just for the purpose of description and are not limited to the scope of the present invention.

Example 1

In Chemical Formula 2, 96.8 wt% of 2-hydroxyethyl methacrylate as a hydrophilic acrylate monomer, 1 wt% of ethylene glycol dimethacrylate as a crosslinking agent, and 0.2 wt% of 2,2'-azobisisobutyronitrile as an initiator were uniformly mixed and then added with 2 wt% of 4-[(E)-phenyldiazenyl]phenyl-2-methacrylate as a specific compound of Chemical Formula 1, and then mixed and uniformly dissolved at room temperature for 30 minutes to prepare a composition for a blue light-blocking soft contact lens.

The composition prepared above was injected into a mold made of polypropylene formed from our company and then subjected to heat treatment at 60°C for 8 hours and at 120°C for 4 hours to complete crosslinking of the composition. After the composition was separated from the mold, the contact lens was immersed and swollen in 0.9 wt% sodium chloride physiological saline for 1 hour and then heated at a temperature of 80°C for 4 hours to complete the disinfection process. Thereafter, the contact lens was packaged in a glass container filled with the 0.9 wt% sodium chloride physiological saline and then sterilized for 20 minutes at a temperature of 120°C and a pressure of 200 kPa. With respect to the blue light-blocking soft contact lens manufactured above, the transmittance in the ultraviolet and visible areas was measured to obtain a spectral distribution curve graph as illustrated in FIG. 2 and the blocking ratio of blue light was about 70%.

Example 2

88.3 wt% of 2-hydroxyethyl methacrylate and 10 wt% of N-vinylpyrrolidone as hydrophilic acrylate monomers, 1 wt% of ethylene glycol dimethacrylate as a crosslinking agent, and 0.2 wt% of 2,2'-azobisisobutyronitrile as an initiator were uniformly mixed and then added with 0.5 wt% of 2-{4-[(E)-phenyldiazenyl]phenoxy}ethyl-2-acrylate as a specific compound of Chemical Formula 2, and then mixed and uniformly dissolved at room temperature for 30 minutes to prepare a composition for a blue light-blocking soft contact lens.

Thereafter, the manufacture of the contact lens was performed in the same manner as Example 1, and with respect to the blue light-blocking soft contact lens manufactured above, the transmittance in the ultraviolet and visible areas was measured to obtain a spectral distribution curve graph as illustrated in FIG. 3 and the blocking ratio of blue light was about 40%.

Comparative Example 1

A contact lens was manufactured in the same manner as Example 1 except that the specific compound of the present invention was not added in preparing the composition for the contact lens in Example 1, and with respect to the contact lens manufactured above, the transmittance in the ultraviolet and visible areas was measured to obtain a spectral distribution curve graph as illustrated in FIG. 1, and the blocking ratio of blue light was about 5%.

Comparative Example 2

Except for using the same content wt% of 2-(4-Benzoyl-3-hydroxyphenoxy)ethyl acrylate as a ultraviolet blocking agent instead of the specific compound of Chemical Formula 2 of the present invention in the preparing of the composition for the contact lens in Example 2, a contact lens was manufactured in the same manner as Example 2. With respect to the contact lens manufactured above, the transmittance in the ultraviolet and visible areas was measured to obtain a spectral distribution curve graph as illustrated in FIG. 4, and the blocking ratio of blue light was about 15%.

Since it is recognized that the blocking ratio of blue light in which the blue light-blocking function is implemented is generally about 30% or more, it can be seen that the blue light-blocking function is not implemented in the case of Comparative Example 1 and Comparative Example 2. According to the above results, it can be seen that since the contact lens manufactured according to the present invention has an excellent blue light-blocking function and may block ultraviolet light, and does not lower the transmittance of visible light other than light in a wavelength range corresponding to blue light, it is possible to manufacture a blue light-blocking soft contact lens that is clear and does not disturb the visual field.

## Claims

1. A method for manufacturing a blue light-blocking soft contact lens and a contact lens manufactured using the method, the method comprising steps of:

   mixing a contact lens composition containing a hydrophilic acrylate monomer, a crosslinking agent, and an initiator;
   adding a specific compound represented by Chemical Formula 1 or 2;

   [Chemical Formula 1]

   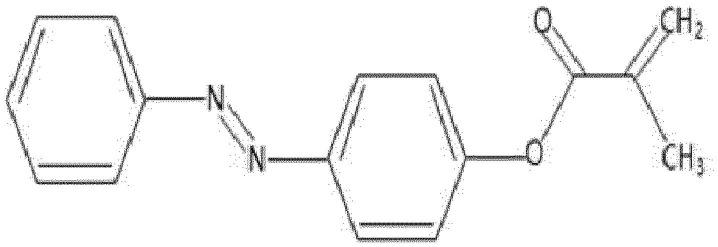

   [Chemical Formula 2]

   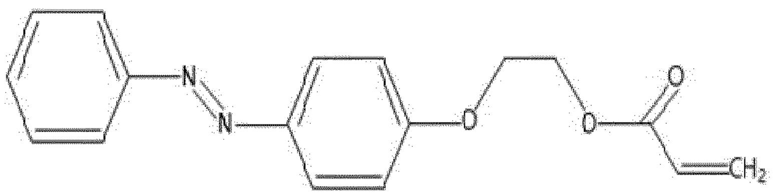

   injecting the composition into a mold for forming the contact lens;
   heat-treating the mold for forming the contact lens injected with the composition;
   separating the formed contact lens from the mold;
   wetting and disinfecting the contact lens; and
   packing and sterilizing the contact lens,
   wherein the specific compound in Chemical Formula 1 is 4-[(E)-phenyldiazenyl]phenyl-2-methacrylate, the specific compound in Chemical Formula 2 is 2-{4-[(E)-phenyldiazenyl]phenoxy}ethyl-2-acrylate, and the content of the specific compound is 0.2 to 3 wt% with respect to the entire composition.

2. The method and the contact lens of claim 1, wherein the hydrophilic acrylate monomer is used by mixing one or more of hydrophilic monomers such as 2-hydroxyethyl methacrylate, N-vinyl pyrrolidone, N,N-dimethyl acrylamide, methacrylic acid, and the like.

3. The method and the contact lens of claim 1, wherein the crosslinking agent is used by mixing one or more of monomers having two or more functional carbon double bonds, such as ethylene glycol dimethacrylate, tetraethylene glycol dimethacrylate, trimethylolpropane trimethacrylate, aryl methacrylate, divinylbenzene, and the like, and the content thereof is 0.5 to 2 wt% with respect to the entire composition.

4. The method and the contact lens of claim 1, wherein the initiator is selected and used from peroxides such as benzoyl peroxide, cumyl peroxide, butyl peroxide, butyl peroxybenzoate and the like or nitrile compounds such as 2,2'-azobis(2,4-dimethylpentanenitrile), 2,2'-azobis(2-methylpropanenitrile), 2,2'-azobisisobutyronitrile, 2,2'-azobisvaleronitrile and the like, and the content thereof is 0.05 to 0.3 wt% with respect to the entire composition

## Patentansprüche

1. Verfahren zum Herstellen einer blaulichtblockierenden weichen Kontaktlinse und einer Kontaktlinse, die unter Verwendung dieses Verfahrens hergestellt ist, wobei das Verfahren die folgenden Schritte umfasst:

Mischen einer Kontaktlinsenzusammensetzung, die ein hydrophiles Acrylatmonomer, ein Vernetzungsmittel und einen Initiator enthält;
Zusetzen einer spezifischen Verbindung, die durch die chemische Formel 1 oder 2 dargestellt wird;

[Chemische Formel 1]

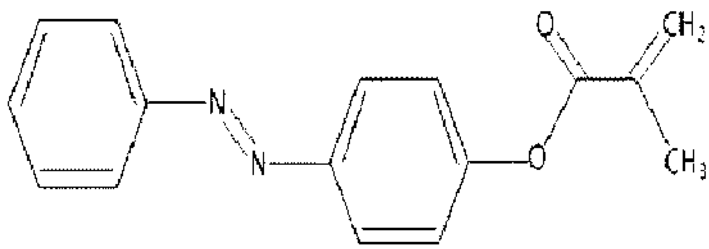

[Chemische Formel 2]

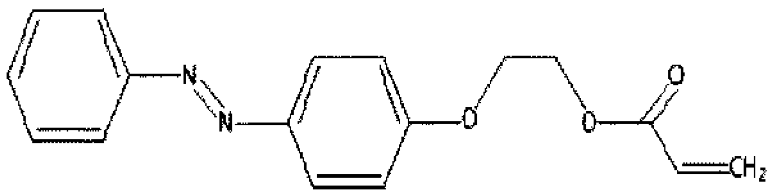

Einspritzen der Zusammensetzung in eine Form zum Ausbilden der Kontaktlinse;
Wärmebehandeln der Form zum Ausbilden der Kontaktlinse, die mit der Zusammensetzung eingespritzt wird;
Trennen der ausgebildeten Kontaktlinse von der Form;
Benetzen und Desinfizieren der Kontaktlinse; und
Verpacken und Sterilisieren der Kontaktlinse, wobei die spezifische Verbindung in der chemischen Formel 1 4-[(E)-Phenyldiazenyl]phenyl-2-methacrylat ist, die spezifische Verbindung in der chemischen Formel 2 2-{4-[(E)-Phenyldiazenyl]phenoxy}ethyl-2-acrylat ist und der Gehalt der spezifischen Verbindung 0,2 bis 3 Gew.-%, in Bezug auf die gesamte Zusammensetzung, beträgt.

2. Verfahren und Kontaktlinse nach Anspruch 1, wobei das hydrophile Acrylatmonomer durch Mischen eines oder mehrerer hydrophiler Monomere, wie etwa 2-Hydroxyethylmethacrylat, N-Vinylpyrrolidon, N,N-Dimethylacrylamid, Methacrylsäure und dergleichen, verwendet wird.

3. Verfahren und Kontaktlinse nach Anspruch 1, wobei das Vernetzungsmittel durch Mischen eines oder mehrerer Monomere, die zwei oder mehr funktionelle Kohlenstoffdoppelbindungen aufweisen, wie etwa Ethylenglykoldimethacrylat, Tetraethylenglykoldimethacrylat, Trimethylolpropantrimethacrylat, Arylmethacrylat, Divinylbenzol und dergleichen, verwendet wird und der Gehalt davon 0,5 bis 2 Gew.-%, in Bezug auf die gesamte Zusammensetzung, beträgt.

4. Verfahren und Kontaktlinse nach Anspruch 1, wobei der Initiator aus Peroxiden, wie etwa Benzoylperoxid, Cumylperoxid, Butylperoxid, Butylperoxybenzoat und dergleichen oder Nitrilverbindungen, wie etwa 2,2'-Azobis(2,4-dimethylpentannitril), 2,2'-Azobis(2-methylpropannitril), 2,2'-Azobisisobutyronitril, 2,2'-Azobisvaleronitril und dergleichen ausgewählt und verwendet wird, und der Gehalt davon 0,05 bis 0,3 Gew.-%, in Bezug auf die gesamte Zusammensetzung, beträgt.

## Revendications

1. Procédé de fabrication d'une lentille de contact souple bloquant la lumière bleue et d'une lentille de contact fabriquée à l'aide du procédé, le procédé comprenant les étapes consistant à :

mélanger une composition de lentille de contact contenant un monomère acrylate hydrophile, un agent de réticulation et un initiateur ;
ajouter un composé spécifique représenté par la formule chimique 1 ou 2 ;

[Formule chimique 1]

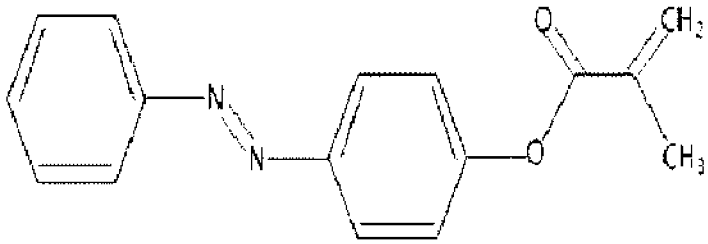

[Formule chimique 2]

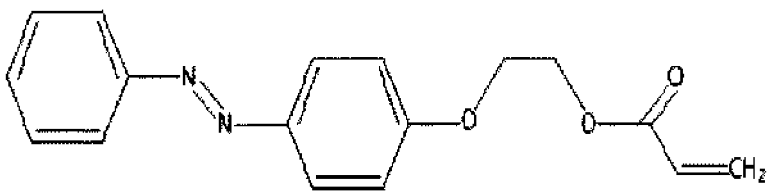

injecter la composition dans un moule pour former la lentille de contact ;
traiter thermiquement le moule pour former la lentille de contact injectée avec la composition ;
séparer la lentille de contact formée du moule ;
mouiller et désinfecter la lentille de contact ; et
emballer et stériliser la lentille de contact,
le composé spécifique dans la formule chimique 1 étant le 4-[(E)-phényldiazényl]phényl-2-méthacrylate, le composé spécifique dans la formule chimique 2 étant le 2-{4-[(E)-phényldiazényl]phénoxy}éthyl-2-acrylate, et la teneur en composé spécifique étant de 0,2 à 3 % en poids par rapport à l'ensemble de la composition.

**2.** Procédé et lentille de contact selon la revendication 1, le monomère acrylate hydrophile étant utilisé en mélangeant un ou plusieurs monomères hydrophiles tels que le 2-hydroxyéthyl méthacrylate, la N-vinyl pyrrolidone, le N, N-diméthyl acrylamide, l'acide méthacrylique, et similaires.

**3.** Procédé et lentille de contact selon la revendication 1, l'agent de réticulation étant utilisé en mélangeant un ou plusieurs monomères ayant deux ou plusieurs doubles liaisons carbonées fonctionnelles, tels que le diméthacrylate d'éthylène glycol, le diméthacrylate de tétraéthylène glycol, le triméthacrylate de triméthylolpropane, le méthacrylate d'aryle, le divinylbenzène, et similaires, et leur teneur étant de 0,5 à 2 % en poids par rapport à l'ensemble de la composition.

**4.** Procédé et lentille de contact selon la revendication 1, l'initiateur étant choisi et utilisé parmi des peroxydes tels que le peroxyde de benzoyle, le peroxyde de cumyle, le peroxyde de butyle, le peroxybenzoate de butyle et similaires ou des composés nitriles tels que le 2,2'-azobis(2,4-diméthylpentanenitrile), 2,2'-azobis(2-méthylpropanenitrile), 2,2'-azobisisobutyronitrile, 2,2'-azobisvaléronitrile et similaires, et leur teneur étant de 0,05 à 0,3 % en poids par rapport à l'ensemble de la composition.

[Fig. 1]

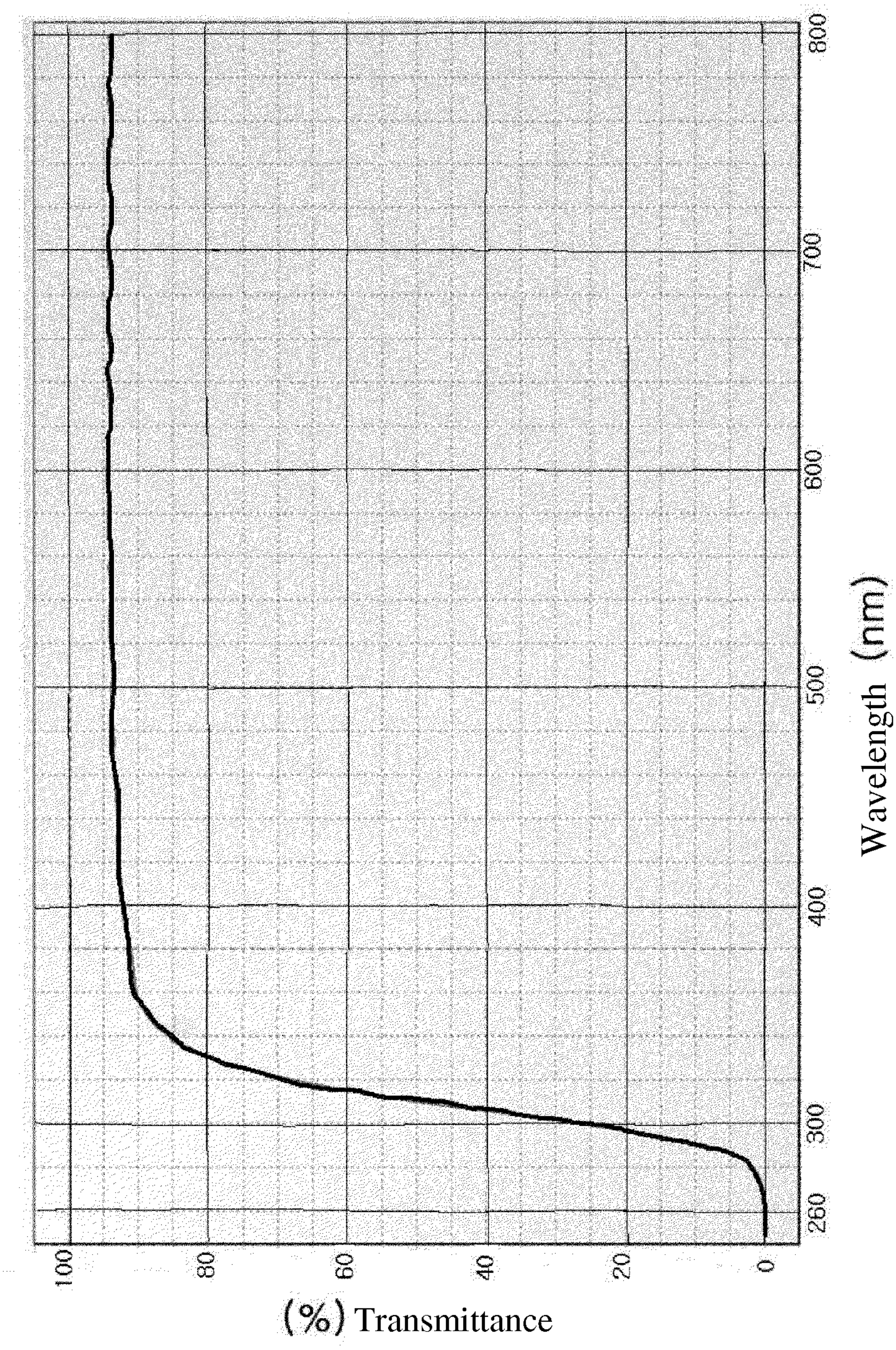
100
80
60
40
20
0
(%) Transmittance
260
300
400
500
600
700
800
Wavelength (nm)

[Fig. 2]

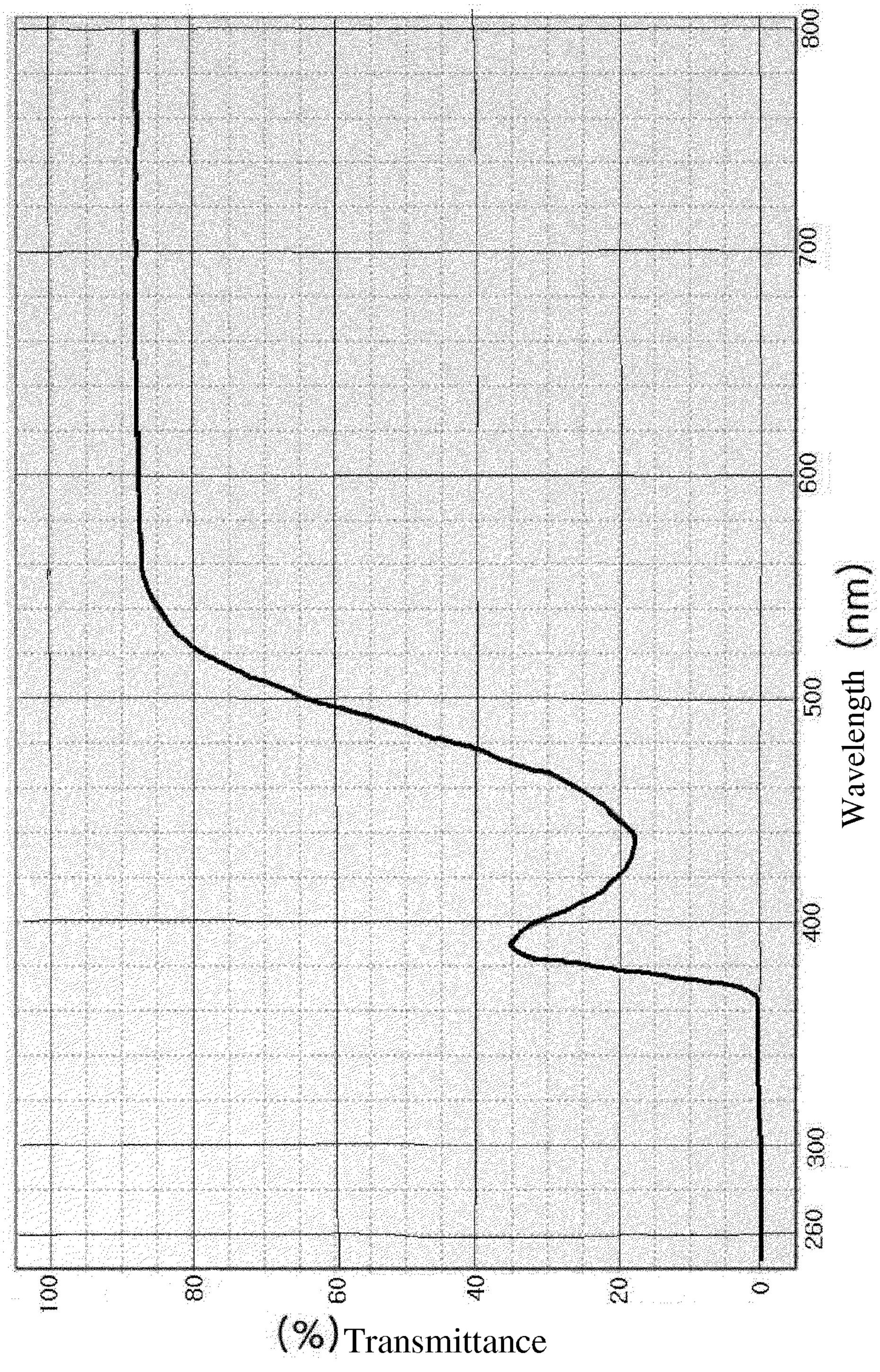
100
80
60
40
20
0
(%)Transmittance
260
300
400
500
600
700
800
Wavelength (nm)

[Fig. 3]

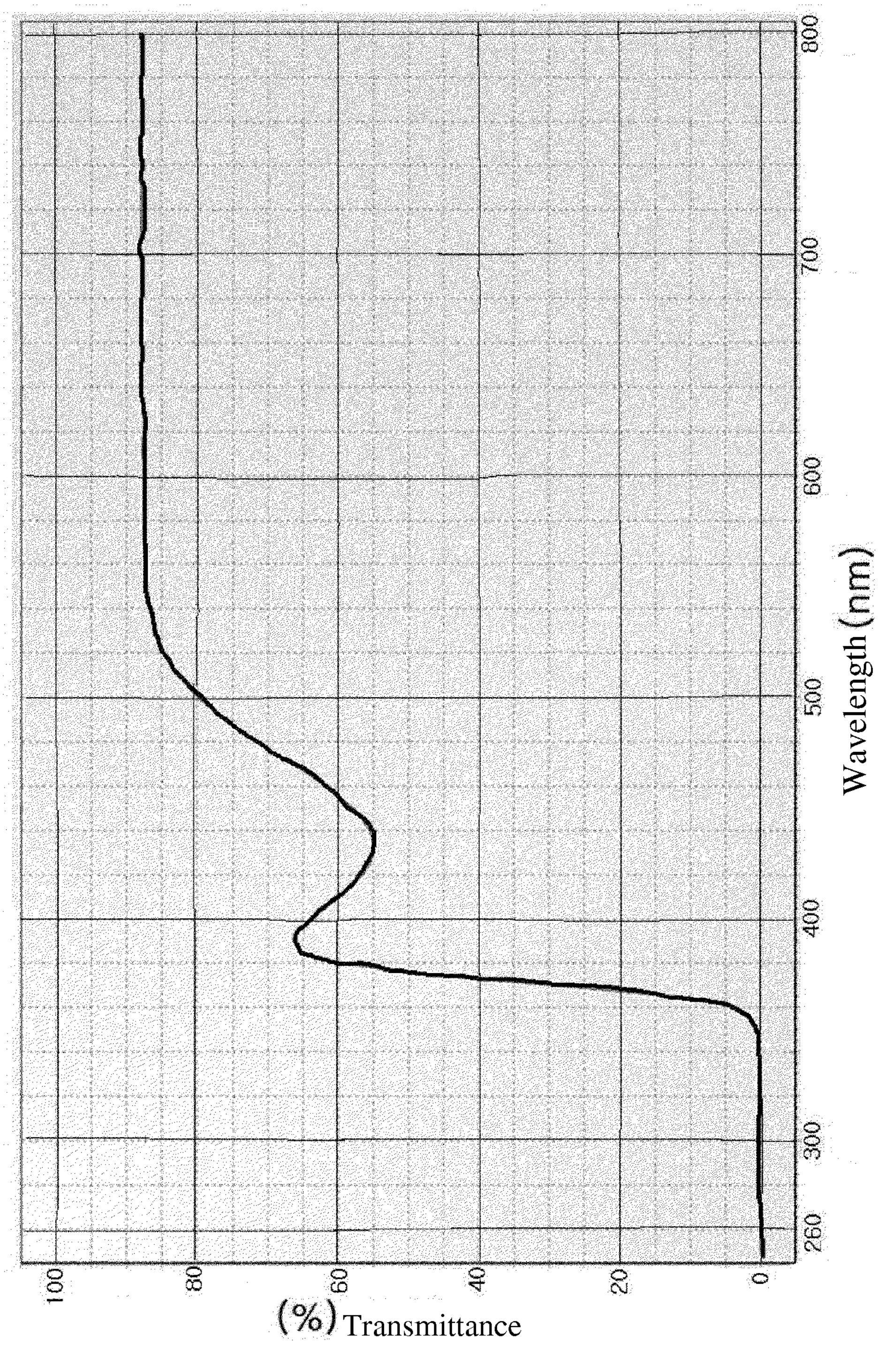

100
80
60
40
20
0
(%) Transmittance
260
300
400
500
600
700
800
Wavelength (nm)

[Fig. 4]

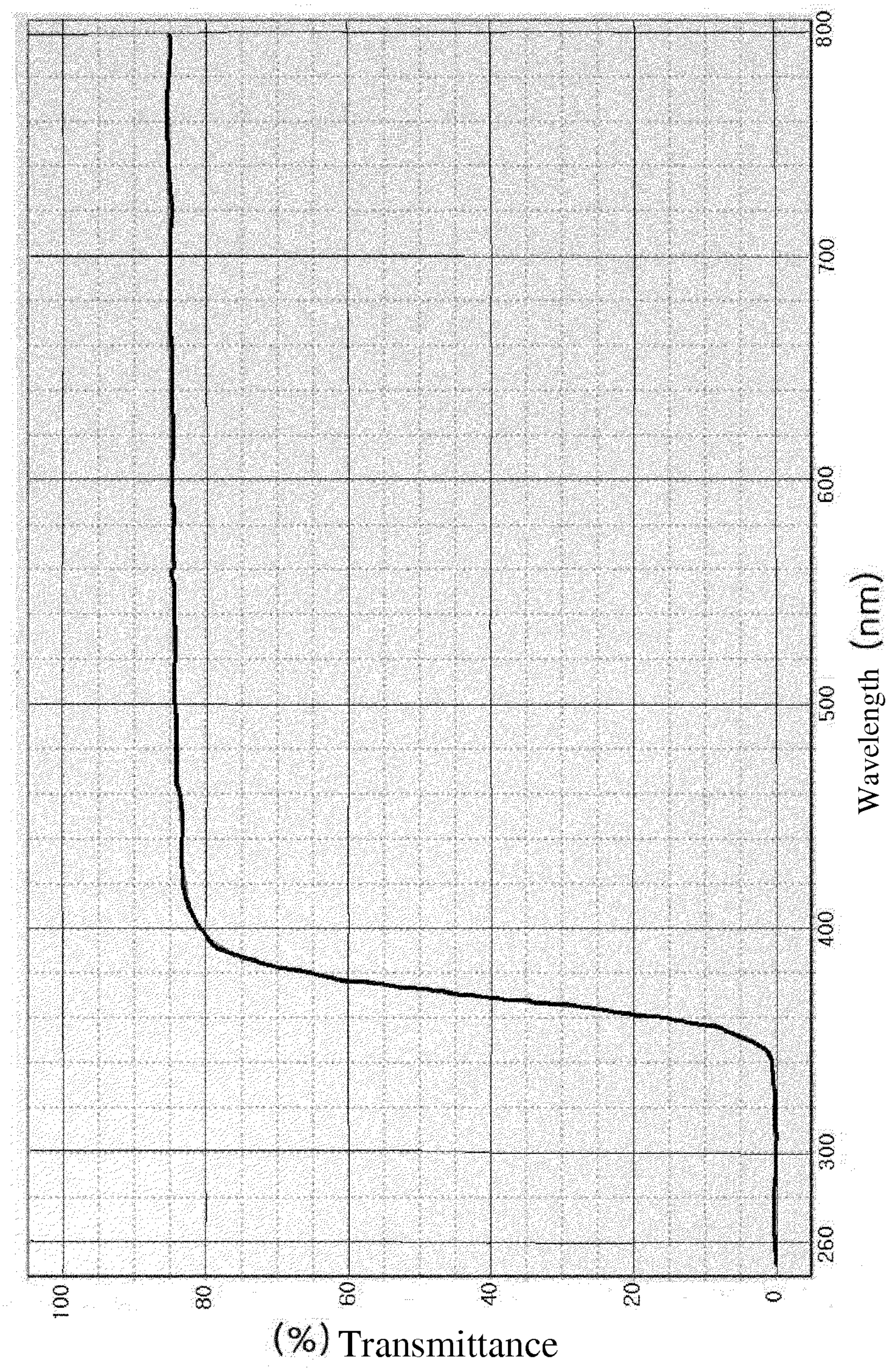

Wavelength (nm)
260
300
400
500
600
700
800
(%) Transmittance
100
80
60
40
20
0

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012004744 A1